# EUROPEAN PATENT SPECIFICATION

(11) **EP 3 950 475 B1**
(45) Date of publication and mention of the grant of the patent: **12.03.2025**
(21) Application number: 19923427.9
(22) Date of filing: 29.03.2019
(51) Int. Cl.: B62J 17/04, B62J 17/06, B62J 17/10

(54) **FLOW-STRAIGHTENING STRUCTURE FOR SADDLE RIDING-TYPE VEHICLE**
STRÖMUNGSRICHTSTRUKTUR FÜR EIN SATTELFAHRZEUG
STRUCTURE DE REDRESSEMENT DE FLUX POUR VÉHICULE DE TYPE À SELLE

(43) Date of publication of application: 09.02.2022
(73) Proprietor: HONDA MOTOR CO., LTD., Minato-ku Tokyo 107-8556 (JP)
(72) Inventor: SHIMMURA, Hiroyuki, Wako-shi, Saitama 351-0193 (JP); KONISHI, Katsuyuki, Wako-shi, Saitama 351-0193 (JP); FURUTO, Takumi, Tokyo 107-8556 (JP)
(74) Representative: Weickmann & Weickmann PartmbB
(86) International application number: PCT/JP2019/013951
(87) International publication number: WO 2020/202240

(56) References cited:
- BR-A- 9 203 697
- JP-A- H10 305 791
- JP-B2- 5 700 676
- JP-U- S6 127 774
- JP-Y2- H0 537 757
- US-A- 5 997 070
- US-A1- 2019 092 412
- ANONYMOUS: "Vortex Generators on windscreen | Ducati.ms - The Ultimate Ducati Forum", 27 June 2012 (2012-06-27), XP055964910, Retrieved from the Internet <URL:https://www.ducati.ms/threads/vortex-generators-on-windscreen.138752/> [retrieved on 20220926]
- ANONYMOUS: "Silence = Roar Flaps + F.Fabbri Screen + Aztec Spacers + Vortex Generators | Ducati.ms -The Ultimate Ducati Forum", 1 December 2011 (2011-12-01), Ducati.ms, XP055964920, Retrieved from the Internet <URL:https://www.ducati.ms/threads/silence-roar-flaps-f-fabbri-screen-aztec-spacers-vortex-generators.242305/> [retrieved on 20220926]

## Description

### [Technical Field]

The present invention relates to a saddle riding scooter-type vehicle, with a flow-straightening structure.

### [Background Art]

Many projections are present on outer surfaces of a vehicle body of a saddle riding-type vehicle such as a motorcycle. For example, JP 2013-112258 A discloses a structure in which stays for attaching a front basket extend on front surfaces of leg shields of a motorcycle.

US 5 997 070 A discloses a flow-straightening structure for a motorcycle comprising:
a front cowl that is disposed in front of a riding space,
wherein outer surfaces of the front cowl are provided with projections for generating prescribed turbulent flows in head winds flowing along the outer surfaces,
wherein each of the projections has a mountain shape having a protrusion apex portion when viewed from a side orthogonal to a projection longitudinal direction across a pair of end portions and viewed from the projection longitudinal direction,
wherein a front side inclined portion ascending from a projection front end portion toward the protrusion apex portion is provided on a front side of the projection in a vehicle forward-rearward direction, and a rear side inclined portion descending from the protrusion apex portion toward a projection rear end portion is provided on a rear side of the projection in the vehicle forward-rearward direction,
wherein either one of the front side inclined portion and the rear side inclined portion is shorter than the other in the projection longitudinal direction.

### [Summary of Invention]

### [Technical Problem]

Incidentally, when projections are provided on outer surfaces of a vehicle body of a saddle riding-type vehicle, it is desired to sufficiently consider countermeasures against a head wind. Regarding head wind countermeasures, it is conceivable that comfort of an occupant be improved, in addition to reduction of air resistance.

However, in the foregoing structure in the related art, no head wind countermeasures are described, and the foregoing problems remain.

Hence, an object of the present invention is to provide a flow-straightening structure for a saddle riding scooter-type vehicle in which traveling resistance can be reduced by straightening flows of head winds using projections provided on outer surfaces of a vehicle body and thus comfort of an occupant can be improved.

### [Solution to Problem]

Regarding solution to the foregoing problems, the invention provides a saddle riding scooter-type vehicle with a flow-straightening structure according to a first aspect of the present invention which matches the features of appended claim 1.

According to a second aspect of the present invention, in the foregoing first aspect, the projections (71) are disposed on front surfaces (m1) in the front cowl (FC) facing a side in front of the vehicle and are disposed within ranges having widths set in advance from circumferential edge portions (e1) to an inner circumferential side on the front surfaces (m1).

According to a third aspect of the present invention, in the foregoing second aspect, the projections (71) are disposed at distances set in advance from the circumferential edge portions (e1).

According to a fourth aspect of the present invention, in the foregoing third or fourth aspect, the projections (71) are disposed such that a projection longitudinal direction across a pair of end portions (71a, 71b) intersects the circumferential edge portions (e1).

According to a fifth aspect of the present invention, in any one of the foregoing second to fourth aspects, lengths of the projections (71) in the projection longitudinal direction across the pair of end portions (71a, 71b) are longer than distances from the circumferential edge portions (e1) to the projections (71).

According to a sixth aspect of the present invention, in any one of the foregoing second to fifth aspects, the plurality of projections (71) are disposed along the circumferential edge portions (e1).

According to a seventh aspect of the present invention, in any one of the foregoing first to sixth aspects, each of the projections (71) is symmetrically formed with respect to an axis (C1) in the projection longitudinal direction across the pair of end portions (71a, 71b).

According to an eight aspect of the present invention, in the foregoing first aspect, the projections (71) are disposed such that the projection longitudinal direction across the pair of end portions (71a, 71b) is directed in the vehicle forward-rearward direction and steering handlebars (12) are disposed on extensions in the projection longitudinal direction in a front view of the vehicle.

According to a ninth aspect of the present invention, in any one of the foregoing first to eighth aspects, the front cowl (FC) includes a screen (SC) extending upward beyond the steering handlebars (12). The projections (71) are disposed on the front surfaces (m1) in the screen (SC) facing a side in front of the vehicle.

According to a tenth aspect of the present invention, in any one of the foregoing first to ninth aspects, attachment structures (ms) for detachably attaching the projections (71) to the front cowl (FC) are provided.

### [Advantageous Effects of Invention]

According to the first aspect of the present invention, since the outer surfaces of the front cowl are provided with the projections generating turbulent flows in head winds flowing along these outer surfaces, an effect of delaying separation of head winds from the outer surfaces of the front cowl is achieved due to prescribed turbulent flows generated behind the projections. For this reason, occurrence of air resistance due to separation of head winds immediately behind the front cowl can be curbed. In addition, entrainment of head winds toward the riding space behind the front cowl can be curbed, and thus comfort of an occupant can be improved.

According to the second aspect of the present invention, since the projections are disposed within predetermined ranges from the circumferential edge portions on the front surfaces of the front cowl, prescribed turbulent flows are likely to be able to reach parts behind the circumferential edge portions of the front cowl, and thus an effect of delaying separation of head winds can be enhanced by the circumferential edge portions of the front cowl.

According to the third aspect of the present invention, since the projections are disposed away from the circumferential edge portions of the front cowl, winds having a high flow rate can be generated on the front surfaces of the front cowl on downstream sides of the projections and can be caused to reach the circumferential edge portions. For this reason, an effect of delaying separation of head winds can be enhanced by the circumferential edge portions of the front cowl.

According to the fourth aspect of the present invention, due to the disposition in which the projection longitudinal direction intersects the circumferential edge portions of the front cowl, air resistance at the time of receiving head winds in flows intersecting the circumferential edge portions of the front cowl can be curbed. **In** addition, compared to a case of disposition in which the projection longitudinal direction lies along the circumferential edge portions of the front cowl, air flows utilizing the lengths of the projections can be favorably controlled.

According to the fifth aspect of the present invention, since the projections are disposed away from the circumferential edge portions of the front cowl by distances shorter than their lengths, while an effect of generating winds having a high flow rate on the front surfaces of the front cowl on the downstream sides of the projections is achieved, elimination of winds having a high flow rate due to the projections which are excessively far from the circumferential edge portions can be curbed.

According to the sixth aspect of the present invention, since a plurality of projections generating turbulent flows in head winds are arranged along the front cowl, entrainment of head winds can be curbed by generating turbulent flows across extensive ranges of the circumferential edge portions, and thus comfort of an occupant can be improved.

According to the seventh aspect of the present invention, since each of the projections is symmetrically formed with respect to the axis in the projection longitudinal direction, a flow of a head wind can be straightened to be straight in the projection longitudinal direction, and thus an effect of straightening a flow can be enhanced.

According to the first aspect of the present invention, since each of the projections is formed to have a mountain shape in a side view, and since the front side inclined portion which gradually ascends is provided at a front portion of the projection and the rear side inclined portion which gradually descends is provided at a rear portion of the projection, air resistance of the projection can be further reduced, and pressure change in a head wind can be made gentle.

According to the first aspect of the present invention, since the front side inclined portion has a gentler slope than the rear side inclined portion, air resistance at the front portion of the projection can be further reduced, and an effect of generating a turbulent flow can be enhanced by making the rear side inclined portion steep.

According to the first aspect of the present invention, since the rear side inclined portion has a gentler slope than the front side inclined portion, air resistance at the rear portion of the projection can be further reduced, and a disturbance effect can be further improved by increasing the flow rate of a head wind at the rear portion of the projection.

According to the first aspect of the present invention, since the front surfaces of the leg shields are provided with the projections generating turbulent flows in head winds flowing along these front surfaces, an effect of delaying separation of head winds from the front surfaces of the leg shields is achieved due to prescribed turbulent flows generated behind the projections. For this reason, occurrence of air resistance due to separation of head winds immediately behind the leg shields can be curbed. In addition, entrainment of head winds toward leg disposition spaces behind the leg shields can be curbed, and thus comfort of an occupant can be improved.

According to the first aspect of the present invention, since the upper ends of the leg shields extend to a side above the seat surface of the seat, the leg shields are at heights covering the knees and the thighs of an occupant in a front view of the vehicle, and thus generation of winds blowing to parts around the legs of an occupant can be curbed by the leg shields. In addition, even if parts around the legs are not covered sufficiently by the leg shields, winds blowing to parts around the legs can be curbed by the projections controlling air flows.

According to the eighth aspect of the present invention, since the steering handlebars are disposed on extensions in the projection longitudinal direction, head winds of which flows are straightened by the projections of the leg shields are blocked by the steering handlebars and are unlikely to reach an occupant, and thus comfort of an occupant can be improved.

According to the ninth aspect of the present invention, since the front surfaces of the screen are provided with the projections generating turbulent flows in head winds flowing along these front surfaces, an effect of delaying separation of head winds from the front surfaces of the screen is achieved due to prescribed turbulent flows generated behind the projections. For this reason, occurrence of air resistance due to separation of head winds immediately behind the screen can be curbed. In addition, entrainment of head winds toward the leg disposition spaces behind the screen can be curbed, and thus comfort of an occupant can be improved.

According to the tenth aspect of the present invention, since the projections are detachably attached to the front cowl, for example, it is possible to cope with a case of desiring to be exposed to a head wind during the summertime, or the like, and thus comfort of an occupant can be improved.

### [Brief Description of Drawings]

Fig. 1 is a left side view of a saddle riding scooter-type vehicle according to an embodiment of the present invention.
Fig. 2 is a front view of the foregoing saddle riding scooter-type vehicle.
Fig. 3 is a top view of a part around a front cowl of the foregoing saddle riding scooter-type vehicle.
Fig. 4 is an explanatory view of a projection for generating a turbulent flow provided in the foregoing front cowl.
Fig. 5 is an explanatory view of a first modification example of the foregoing projection.
Fig. 6 is an explanatory view of a second modification example of the foregoing projection.
Fig. 7 is an explanatory view of a third modification example of the foregoing projection.
Fig. 8(a) is a side view illustrating operation of the front cowl without the foregoing projections, and Fig. 8(b) is a side view illustrating operation of the front cowl provided with the foregoing projections.
Fig. 9(a) is a top view illustrating operation of the front cowl without the foregoing projections, and Fig. 9(b) is a top view illustrating operation of the front cowl provided with the foregoing projections.
Fig. 10 is a left side view of a motorcycle according to a second embodiment of the present invention.
Fig. 11 is a front view of the motorcycle according to the second embodiment.
Fig. 12 is a top view of a part around the front cowl of the saddle riding scooter-type vehicle according to the second embodiment.
Fig. 13(a) is a side view illustrating operation of the front cowl according to the second embodiment without the foregoing projections, and Fig. 13(b) is a side view illustrating operation of the front cowl according to the second embodiment provided with the foregoing projections.
Fig. 14 is a left side view of a motorcycle according to a third not claimed embodiment of
   the present invention.
Fig. 15 is a front view of the motorcycle according to the third not claimed embodiment.
Fig. 16 is a top view of a part around the front cowl of the motorcycle according to the third not claimed embodiment.
Fig. 17(a) is a side view illustrating operation of the front cowl according to the third not claimed
   embodiment without the foregoing projections, and Fig. 17(b) is a side view illustrating operation of the front cowl according to the third not claimed embodiment provided with
   the foregoing projections.

### [Description of Embodiments]

Hereinafter, embodiments of the present invention will be described with reference to the drawings. Unless otherwise specified in the following description, directions to the front, the rear, the left, the right, and the like are the same as directions in a vehicle, which will be described below. In addition, an arrow FR indicating a side in front of the vehicle, an arrow LH indicating the left side of the vehicle, an arrow UP indicating a side above the vehicle, and a line CL indicating the center in a lateral direction of a vehicle body are marked in suitable places in the diagrams used in the following description.

### <Entirety of vehicle>

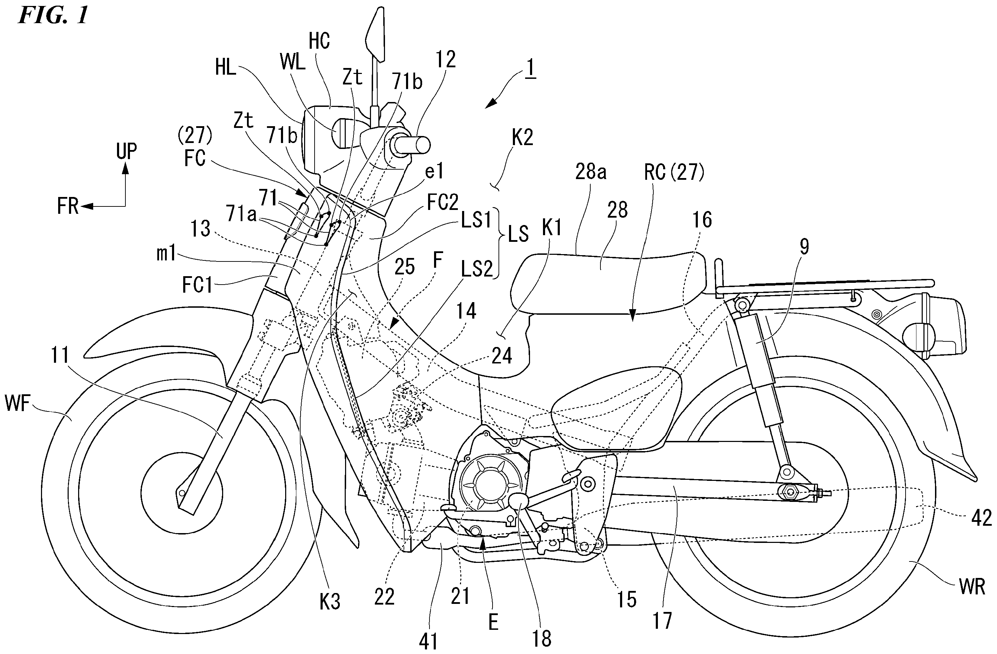

As illustrated in Fig. 1, a saddle riding scooter-type vehicle 1 of the present embodiment is a business-type motorcycle which includes a so-called underbone-type vehicle body frame F, thereby improving the ease of straddling the vehicle body and lowering the center of gravity of the vehicle.

The vehicle body frame F includes a head pipe 13 which is positioned at a front end portion, a main frame 14 which extends downward to the rear from the head pipe 13, and a pivot frame 15 which extends downward from a rear end portion of the main frame 14. A front wheel WF, a pair of left and right front forks 11, and steering handlebars 12 of the motorcycle 1 are supported by the head pipe 13 in a steerable manner. A front end portion of a swing arm 17 is supported by the pivot frame 15 in a vertically swingable manner. A rear wheel WR of the motorcycle 1 is supported at a rear end portion of the swing arm 17. A front end portion of a seat frame 16 is coupled to a rear portion of the main frame 14. A pair of left and right rear cushions 9 are disposed between the seat frame 16 and the swing arm 17.

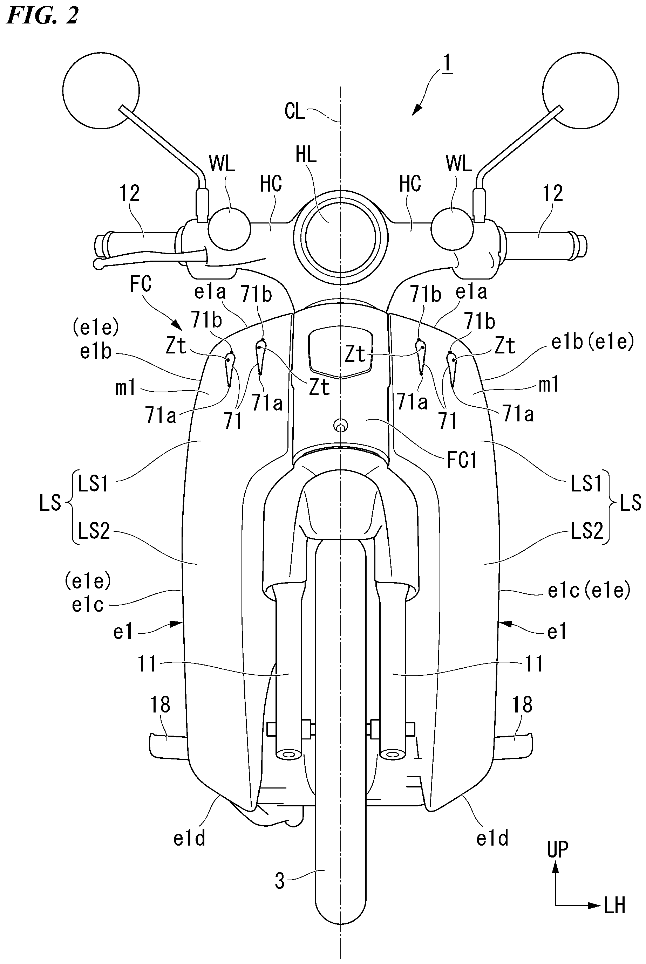

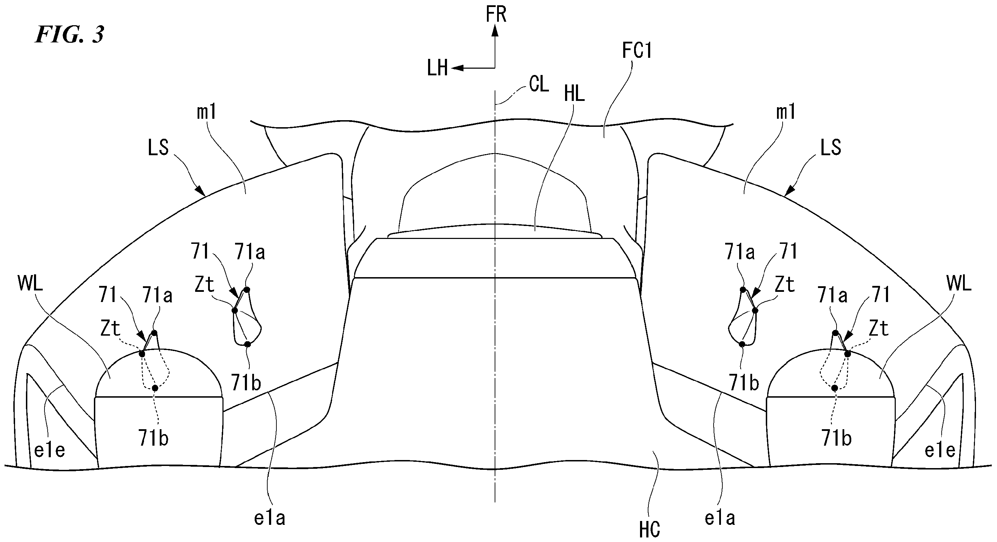

Also with reference to Figs. 2 and 3, the vehicle body of the motorcycle 1 is covered with a vehicle body cover 27. The vehicle body cover 27 includes a front body cover (front cowl) FC which covers a part around the head pipe 13 and a part around a front portion of the main frame 14, and a rear body cover (rear cowl) RC which covers a part around the rear portion of the main frame 14 and a part around the seat frame 16. Left and right leg shields LS projecting outward in the lateral direction are formed at left and right side portions of the front body cover FC. A seat 28 for an occupant sitting thereon is supported above the rear body cover RC. A space above the main frame 14 and between the seat 28 and the steering handlebars 12 serves as a straddling space K1 allowing an occupant to easily straddle the vehicle body. The steering handlebars 12 are respectively covered with handlebar covers HC except for left and right grip portions. A headlamp HL is disposed on the front side at the center in the lateral direction between the handlebar covers HC, and a pair of left and right winker lamps WL are disposed on the front sides of left and right side portions of the handlebar covers HC.

An engine E serving as a motor of the motorcycle 1 is supported below the main frame 14. Steps 18 on which an occupant puts his/her feet are disposed on both left and right sides of the engine E.

The engine E is a four-stroke single-cylinder engine in which a rotary center axis of a crankshaft (not illustrated) lies in the lateral direction (vehicle width direction) and a cylinder portion 22 protrudes forward from a front end portion of a crankcase 21 substantially in a horizontal manner (specifically, in a manner of being inclined slightly upward to the front).

A throttle body (or a carburetor) 24 and an air cleaner 25 (intake system components) are connected to parts above the cylinder portion 22 of the engine E.

An exhaust pipe 41 is connected to a lower portion (an exhaust port of a cylinder head) of the cylinder portion 22. The exhaust pipe 41 is curved rearward and extends below the cylinder portion 22, and it is connected to a muffler (silencer) 42 disposed on the right side of the rear wheel WR.

The front body cover FC includes a front center cover FC1 which covers a part around the head pipe 13 from the front, and an inner cover FC2 which covers a part around the head pipe 13 from the rear and covers a part around the main frame 14 from above. The pair of left and right leg shields LS are integrally formed on both left and right sides of the inner cover FC2.

The leg shields LS are disposed in front of leg disposition spaces K3 on both sides of a lower portion of a riding space K2 and cover the leg parts of an occupant (rider) from the front. In the leg shields LS, upper end portions extend to a side above an upper surface (seat surface) 28a of the seat 28. The upper end portions of the leg shields LS are disposed below a side in front of the steering handlebars 12 with gaps therebetween. In the leg shields LS, lower end portions extend to a side below the steps 18.

The leg shields LS respectively have upper portions LS1 which are disposed side by side on both left and right sides of the front center cover FC1, and lower portions LS2 which extend downward from the upper portions LS1. The upper portions LS1 are inclined so as to be positioned rearward toward the upper side in a side view, and the lower portions LS2 are inclined so as to be positioned rearward toward the lower side in a side view. The upper portions LS1 and the lower portions LS2 are respectively connected to each other so as to form arc shapes projecting forward in a side view. Left and right inner side portions of the lower portions LS2 are displaced outward in the lateral direction with respect to the left and right inner side portions of the upper portions LS1, thereby forming a wheel house of the front wheel WF.

The upper portions LS1 and the lower portions LS2 are inclined so as to be positioned rearward toward sides outward in the lateral direction in a plan view. In the leg shields LS constituted of the upper portions LS1 and the lower portions LS2, front surfaces m1 facing a side in front of the vehicle have spherical shapes (curved shapes) projecting forward and outward in the lateral direction.

The upper portions LS1 respectively have upper edge portions e1a which are inclined so as to be positioned downward toward sides outward in the lateral direction in a front view, and upper portion side edge portions e1b which are inclined so as to be positioned outward in the lateral direction toward the lower side in a front view. The lower portions LS2 respectively have lower portion side edge portions e1c which are slightly inclined so as to be positioned inward in the lateral direction toward the lower side in a front view, and lower edge portions e1d which are inclined so as to be positioned on the lower side toward sides inward in the lateral direction in a front view. The upper edge portions e1a, the upper portion side edge portions e1b, the lower portion side edge portions e1c, and the lower edge portions e1d form circumferential edge portions e1 which smoothly continue without forming a corner portion or a recessed portion in the leg shields LS. The upper portion side edge portions elb and the lower portion side edge portions e1c may be collectively referred to as side edge portions e1e.

The front surfaces m1 of the leg shields LS are inclined (curved) so as to be positioned rearward as the positions thereof go toward sides of the circumferential edge portions e1 (outer circumferential sides). In other words, the front surfaces m1 of the leg shields LS are inclined (curved) so as to be positioned forward as the positions thereof go from the circumferential edge portions e1 toward inner circumferential sides.

The leg shields LS of the present embodiment have single-ply plate structures which are integrally formed on both sides of the inner cover FC2. However, for example, the leg shields LS constituted of a plurality of elements having double-ply plate structures or the like in which panels are formed on both sides of the front center cover FC1 may be adopted.

### <Cowl projection structure>

As illustrated in Figs. 1 to 3, projections 71 for disturbing head winds and generating small turbulent flows are provided at the circumferential edge portions e1 of the leg shields LS. The projections 71 protrude forward from the outer surfaces (front surfaces m1) on the front surfaces m1 of the leg shields LS. The projections 71 function as vortex generators for generating prescribed turbulent flows (vortices) in head winds flowing along the curved front surfaces m1 of the leg shields LS. That is, air flows behind the circumferential edge portions e1 of the leg shields LS are controlled by intentionally causing the projections 71 to generate small turbulent flows, and thus an effect of reducing air resistance of the leg shields LS or the like is achieved.

In the present embodiment, small projections are provided on the front surfaces m1 of the leg shields LS, and small stable vortices (turbulences) are generated due to the principle of a turbulator (vortex generator). Accordingly, improvement in fuel efficiency and the like is achieved by curbing generation of significantly unstable vortices and reducing air resistance around the leg shields LS. The projections 71 reduce wind noise due to generated turbulent flows and improve stability around the leg shields LS. Since the projections 71 curb (delay) separation of head winds, an influence of entrainment of head winds on the leg disposition spaces behind the leg shields LS is curbed, comfort in the riding space K2 is favorably maintained.

The projections 71 are disposed within ranges having prescribed widths along the front surfaces m1 from the circumferential edge portions e1 (outer circumferential edge portions) to the inner circumferential side on the front surfaces m1 of the leg shields LS. When viewed in a direction perpendicular to projection installation positions (points) on the front surfaces m1 (surface-perpendicular direction), the projections 71 are disposed such that extended lines thereof in a longitudinal direction (projection longitudinal direction) intersect the circumferential edge portions e1. When viewed in the surface-perpendicular direction, straight lines (axes C1) in the projection longitudinal direction are disposed at angles closer to the vertical axis (for example, within a range of 45° to 90°) instead of angles closer to the horizontal axis (for example, within a range of 0° to 45°) with respect to tangential lines of the circumferential edge portions e1 at intersections between the tangential lines and the circumferential edge portions e1.

The projections 71 are disposed at prescribed distances along the front surfaces m1 from the circumferential edge portions e1 of the leg shields LS to the inner circumferential side. The prescribed distances are set to lengths shorter than the overall lengths of the projections 71 in the projection longitudinal direction.

A plurality of projections 71 are disposed side by side along the circumferential edge portions e1. Specifically, a plurality of (two) projections 71 are disposed side by side along the upper edge portions e1a at the upper end portions of the leg shields LS. The plurality of projections 71 provided at the upper end portions of the leg shields LS are disposed along the upper edge portions e1a with gaps therebetween. In a front view of the vehicle, the plurality of proj ections 71 provided at the upper end portions of the leg shields LS are disposed such that the steering handlebars 12 are positioned on extensions in the projection longitudinal direction.

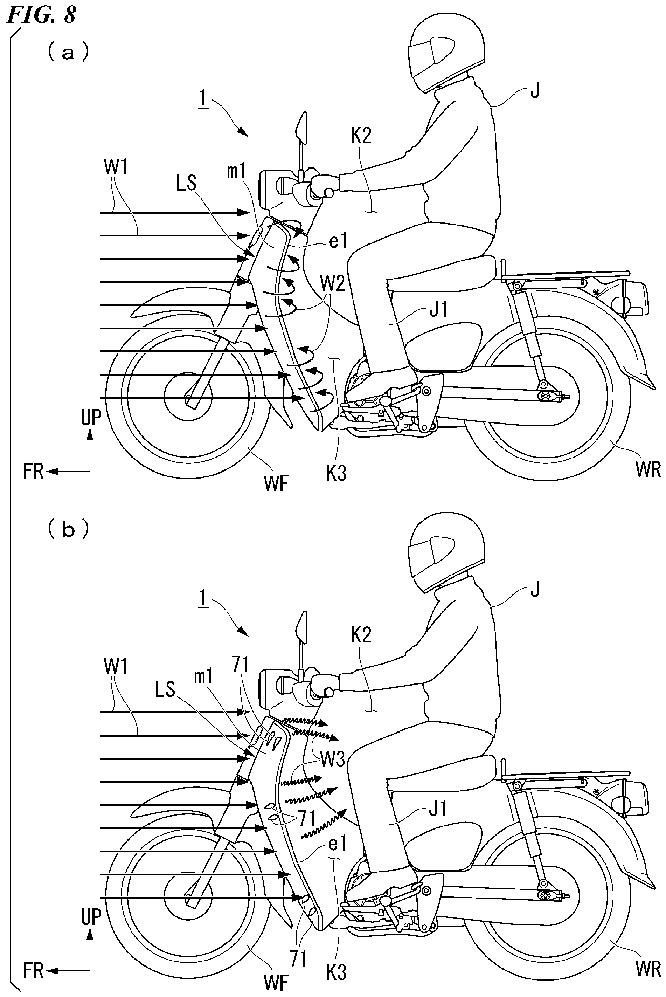

In addition, as illustrated in Fig. 8(b), the projections 71 may be disposed at outer end portions of the leg shields LS. In the example of Fig. 8(b), a plurality of (two) projections 71 are respectively disposed side by side along the side edge portions e1e at vertically intermediate portions and the lower end portions of the leg shields LS.

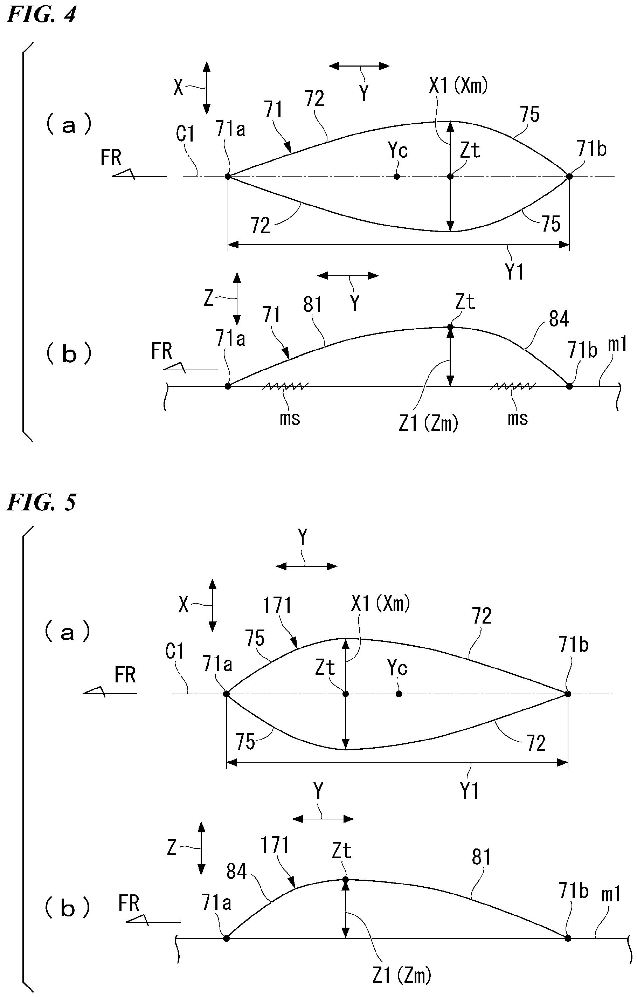

Fig. 4(a) is a plan view of the projection 71 viewed in the surface-perpendicular direction, and Fig. 4(b) is a side view of the projection 71 viewed in a projection width direction orthogonal to the surface-perpendicular direction. The projection width direction corresponds to a direction along a tangential line at the surface-perpendicular direction among the directions orthogonal to, the projection installation position (point) on the front surface m1.

The projection 71 has an external shape extending in the projection longitudinal direction (arrow Y direction). The projection 71 has an external shape which is line-symmetrical with respect to the center axis C1 in the projection longitudinal direction in a plan view of Fig. 4(a). The projection 71 has an external shape which is line-symmetrical with respect to a perpendicular line at the projection installation position on the front surface m1 when viewed in the axis C1 direction.

In the projection 71, a dimension (overall length) Y1 in the projection longitudinal direction is longer than both a dimension (full width) X1 in the projection width direction (arrow X direction) orthogonal to the projection longitudinal direction in a plan view of Fig. 4(a) and a dimension (overall height) Z1 in a projection height direction (arrow Z direction) along the perpendicular line. The projection 71 has an inclination angle along the front surface m1 and is disposed such that the projection longitudinal direction is directed in a vehicle forward-rearward direction. The reference sign 71a in the diagrams indicates a front end portion of the projection 71, and the reference sign 71b indicates a rear end portion of the projection 71.

In the present embodiment, "being directed in the vehicle forward-rearward direction" includes disposition inclined approximately at the inclination angle at the projection installation position on the front surface m1 of the leg shield LS with respect to the vehicle forward-rearward direction. For example, the projection installation position corresponds to a position of the center of gravity of a joint surface shape of the projection 71 with respect to the leg shield LS.

The projection 71 is formed such that the full width X1 in the projection width direction orthogonal to the projection longitudinal direction is narrower than the overall length Y1 in the projection longitudinal direction. The projection 71 is formed such that the overall height Z1 in the projection height direction orthogonal to the projection longitudinal direction is shorter than the overall length Y1 in the projection longitudinal direction. Accordingly, air resistance of the projection 71 at the time of receiving head winds from a side in front of the vehicle is curbed.

In a plan view of Fig. 4(a), the projection 71 has a largest width portion Xm in the projection width direction behind a central position Yc in the projection longitudinal direction. In a plan view of Fig. 4(a), the projection 71 has a pair of first side edges 72 which are inclined to a side in front of the largest width portion Xm so as to be positioned on the axis C1 side toward the front side. In a plan view of Fig. 4(a), the projection 71 has a pair of second side edges 75 which are inclined to a side behind the largest width portion Xm so as to be positioned on the axis C1 side toward the rear side.

In a side view of Fig. 4(b), the projection 71 has a largest height portion Zm in the projection height direction behind the central position Yc in the projection longitudinal direction. For example, the largest height portion Zm is at the same position in the forward-rearward direction as the largest width portion Xm, but these may be offset in the forward-rearward direction. The reference sign Zt in the diagrams indicates an upper end of the largest height portion Zm (which will hereinafter be referred to as a protrusion apex portion Zt). The projection 71 has a mountain shape having the protrusion apex portion Zt in a side view orthogonal to the projection longitudinal direction (a side view in the projection width direction).

In a side view of Fig. 4(b), the projection 71 has a first inclined portion 81 which is inclined to a side in front of the protrusion apex portion Zt so as to be positioned downward toward the front side.

In a side view of Fig. 4(b), the projection 71 has a second inclined portion 84 which is inclined to a side behind the protrusion apex portion Zt so as to be positioned downward toward the rear side.

In a view in the axis C1 direction, the projection 71 has substantially a triangular shape (mountain shape). In a view in the axis C1 direction, the projection 71 has a pair of side wall portions which are inclined so as to be positioned inward in the width direction toward the upper side.

In a side view of Fig. 4(b), the projection 71 has the first inclined portion 81 which serves as a forward descending front side inclined portion in front of the protrusion apex portion Zt and has the second inclined portion 84 which serves as a rearward descending rear side inclined portion behind the protrusion apex portion Zt. The height of the projection 71 gradually increases in front of the protrusion apex portion Zt and gradually decreases behind the protrusion apex portion Zt. Accordingly, air resistance at the time when the projection 71 receives a head wind flowing along an outer surface of a cowl main body 43 is reduced. **In** addition, compression and expansion of a head wind are alleviated, and thus generation of noise (wind noise) is curbed.

**In** the projection 71, the first inclined portion 81 serving as a front side inclined portion is formed to be longer than the second inclined portion 84 serving as a rear side inclined portion in the projection longitudinal direction. That is, a length L1 of the first inclined portion 81 in the projection longitudinal direction is longer than a length L2 of the second inclined portion 84 in the projection longitudinal direction. Accordingly, the projection 71 is formed such that the front side inclined portion has a gentler inclination than the rear side inclined portion. For this reason, air resistance of the front portion of the projection 71 is reduced, and a turbulent flow is likely to be generated at the rear portion of the projection 71.

**In** a plan view of Fig. 4(a), the width of the projection 71 gradually increases in front of the largest width portion Xm and gradually decreases behind the largest width portion Xm. For this reason, air resistance is reduced, and generation of noise (wind noise) is curbed.

Fig. 5 illustrates a first modification example of the projection 71 reversely directed in the forward-rearward direction.

**In** a projection 171 of this modification example, the first inclined portion 81 serving as a rear side inclined portion is formed to be longer than the second inclined portion 84 serving as a front side inclined portion in the projection longitudinal direction. Accordingly, the projection 171 is formed such that the rear side inclined portion has a gentler inclination than the front side inclined portion. For this reason, the projection 171 has a nearly streamlined shape so that separation of a head wind which has passed through the protrusion apex portion Zt at the rear portion of the projection 171 is curbed and the flow rate of a head wind increases at the rear portion of the projection 171. Thus, a disturbance effect of a head wind is improved.

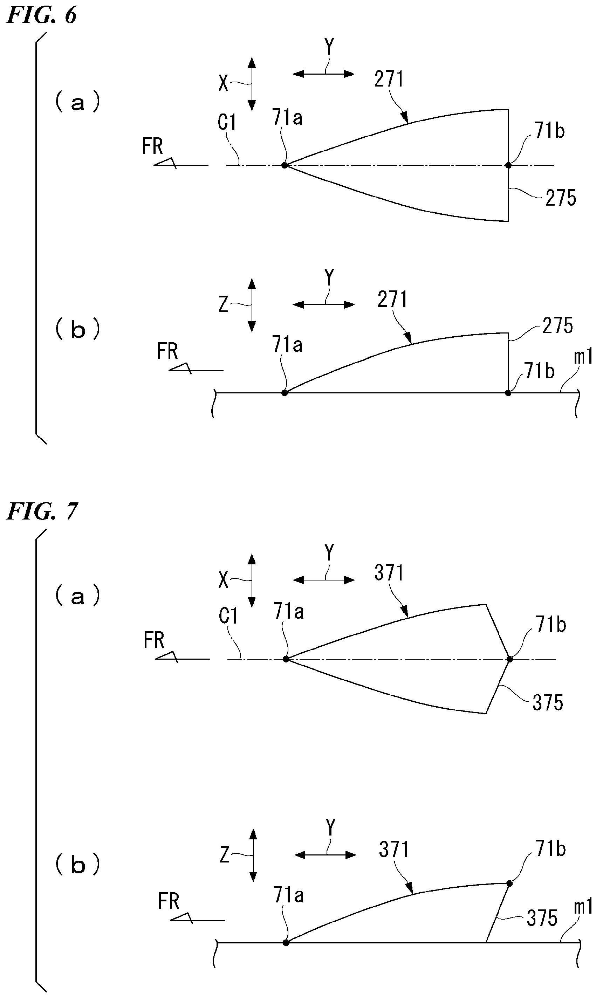

Fig. 6 illustrates a second modification example in which the shape of the projection 71 is modified. **In** a projection 271 of this modification example, in contrast to the example in Fig. 4, rear parts of the largest width portion Xm and the largest height portion Zm are cut, thereby forming a rear end surface 275 orthogonal to the axis C1. Accordingly, a turbulent flow is more likely to be generated at the rear portion of the projection 271.

Fig. 7 illustrates a third modification example in which the shape of the projection 71 is further modified. **In** a projection 371 of this modification example, in contrast to the example in Fig. 6, a rear end surface 375 which is inclined so as to be positioned rearward toward the upper side is formed. Accordingly, a turbulent flow is much more likely to be generated at the rear portion of the projection 71.

Unless otherwise specified, the term "a projection 71" in the present embodiment includes each of the foregoing modification examples.

Here, the front body cover FC includes attachment devices ms (refer to Fig. 4) for detachably attaching the projection 71 to the leg shield LS. For example, an attachment structure ms includes a fastening structure using a bolt, a nut, and the like; an engagement structure using an interlock claw or the like; and the like in addition to a joint structure using a magnet, a hook-and-loop fastener, or the like. Accordingly, it is possible to switch between the presence and absence of the projections 71 or adjust the number and disposition of projections 71 in accordance with the season, the preference of an occupant, or the like.

### <Operation>

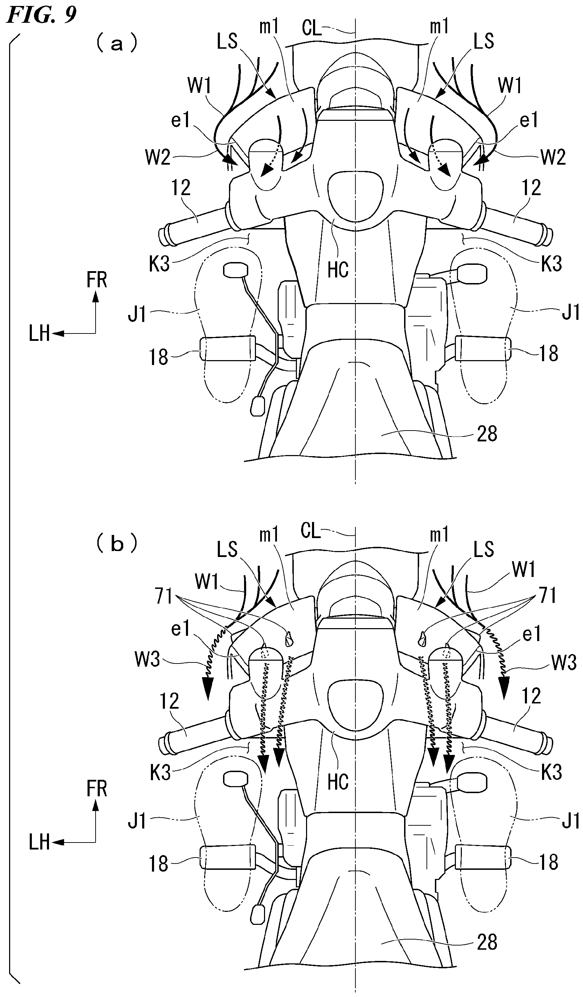

Next, operation of the projections 71 of the present embodiment will be described with reference to Figs. 8 and 9.

With reference to the comparative example in Figs. 8(a) and 9(a), if head winds W1 flow around the leg shields LS when the motorcycle 1 travels, negative pressures are generated behind the circumferential edge portions e1 of the leg shields LS. The head winds W1 which have flowed on the front surfaces m1 of the leg shields LS along their curves are sucked due to the negative pressures behind the leg shields LS and flow such that they are entrained into the riding space K2 (into the leg disposition spaces K3) behind the leg shields LS. These head winds W1 cause air resistance around the leg shields LS by being separated from the circumferential edge portions e1 of the leg shields LS. In addition, some head winds W1 become air flows (entrainment winds W2) entrained into the riding space K2 (into the leg disposition spaces K3) behind the leg shields LS, and these entrainment winds W2 blow into the leg disposition spaces K3 from above and outer sides, thereby affecting comfort around leg parts J1 of an occupant J.

Regarding the foregoing comparative example, as illustrated in Fig. 8(b) and 9(b), the following effects are exhibited by providing the projections 71 in the vicinity of the circumferential edge portions e1 on the front surfaces m1 in the leg shields LS. That is, when the projections 71 are provided in flows of the head winds W1 along the front surfaces m1 of the leg shields LS, small turbulent flows (vortices) W3 are generated in these head winds W1. Since these turbulent flows W3 are caused to flow in the vicinity of the circumferential edge portions e1 of the leg shields LS, boundary layers of the head winds W1 are made turbulent in the vicinity of the circumferential edge portions e1 of the leg shields LS, and separation of air flows from the circumferential edge portions e1 of the leg shields LS is delayed. Accordingly, generation of large vortices immediately after the head winds W1 have passed through the circumferential edge portions e1 of the leg shields LS is curbed, and generation of air flows (entrainment winds) which may be entrained into the riding space K2 is curbed. Therefore, air resistance of the leg shields LS is reduced, and an influence on the riding space K2 can be inhibited.

As described above, the saddle riding scooter-type vehicle, with a flow-straightening structure according to the foregoing embodiment includes the front body cover FC disposed in front of the riding space K2, and the outer surfaces (front surfaces m1) of the front body cover FC are provided with the projections 71 for generating prescribed turbulent flows in head winds flowing along the outer surfaces.

Specifically, the front body cover FC includes the leg shields LS which are disposed in front of the leg disposition spaces K3 on both sides of the lower portion of the riding space K2. The projections 71 are disposed on the front surfaces m1 in the leg shields LS facing a side in front of the vehicle.

According to this constitution, since the outer surfaces of the front body cover FC (the front surfaces m1 of the leg shields LS) are provided with the projections 71 generating turbulent flows in head winds flowing along these outer surfaces (front surfaces m1), an effect of delaying separation of head winds from the outer surfaces of the front body cover FC (the front surfaces m1 of the leg shields LS) is achieved due to prescribed turbulent flows generated behind the projections 71. For this reason, occurrence of air resistance due to separation of head winds immediately behind the front body cover FC (immediately behind the leg shields LS) can be curbed. In addition, entrainment of head winds toward the riding space K2 behind the front body cover FC (the leg disposition spaces K3 behind the leg shields LS) can be curbed, and thus comfort of an occupant can be improved.

Parts for disposing the projections 71 are not limited to the leg shields LS. For example, the projections 71 may be disposed in the handlebar covers HC. When a wind screen standing upward beyond the steering handlebars 12 is provided, the projections 71 may be disposed in this wind screen. The projections 71 are not limited to being disposed on the front surfaces of the front cowl and may be disposed on other outer surfaces such as side surfaces or lower surfaces. When the front cowl has a multi-layer structure, the projections 71 may be disposed on outer surfaces of any layer.

In the foregoing flow-straightening structure for a saddle riding-type vehicle, the seat 28 on which an occupant sits is provided behind the leg shields LS, and the upper ends of the leg shields LS extend to a side above the seat surface 28a of the seat 28.

According to this constitution, since the upper ends of the leg shields LS extend to a side above the seat surface 28a of the seat 28, the leg shields LS are at heights covering the knees and the thighs of an occupant in a front view of the vehicle, and thus generation of winds blowing to parts around the legs of an occupant can be curbed by the leg shields LS. In addition, even if parts around the legs are not covered sufficiently by the leg shields LS, winds blowing to parts around the legs can be curbed by the projections 71 controlling air flows.

In the foregoing flow-straightening structure for a saddle riding-type vehicle, the projections 71 are disposed such that the projection longitudinal direction across the pair of end portions 71a and 71b is directed in the vehicle forward-rearward direction and the steering handlebars 12 are disposed on extensions in the projection longitudinal direction in a front view of the vehicle.

According to this constitution, since the steering handlebars 12 are disposed on extensions in the projection longitudinal direction, head winds of which flows are straightened by the projections 71 of the leg shields LS are blocked by the steering handlebars 12 and are unlikely to reach an occupant, and thus comfort of an occupant can be improved.

In the foregoing flow-straightening structure for a saddle riding-type vehicle, the attachment structures ms for detachably attaching the projections 71 to the leg shields LS are provided.

According to this constitution, since the projections 71 are detachably attached to the leg shields LS, for example, it is possible to cope with a case of desiring to be exposed to a head wind during the summertime, or the like, and thus comfort of an occupant can be improved.

That is, since it may be desired to guide even a little bit of head winds to the riding space K2 during the summertime or the like, air flows according to the season, the preference of an occupant, or the like can be controlled by making the projections 71 for straightening flows attachable and detachable. In addition, the degree of freedom of installation of the projections 71 can be enhanced and air flows can be easily controlled by providing many elements for the attachment structures ms on the vehicle body side in a plurality of parts.

In the foregoing flow-straightening structure for a saddle riding-type vehicle, the projections 71 are disposed within ranges having widths set in advance from the circumferential edge portions e1 of the front surfaces m1 to the inner circumferential side.

According to this constitution, since the projections 71 are disposed within predetermined ranges from the circumferential edge portions e1 on the front surfaces m1 of the leg shields LS, prescribed turbulent flows are likely to be able to reach parts behind the circumferential edge portions e1 of the leg shields LS, and thus an effect of delaying separation of head winds can be enhanced by the circumferential edge portions e1 of the leg shields LS.

In the foregoing flow-straightening structure for a saddle riding-type vehicle, the projections 71 are disposed at distances set in advance from the circumferential edge portions e1.

According to this constitution, since the projections 71 are disposed away from the circumferential edge portions e1 of the leg shields LS, winds having a high flow rate can be generated on the front surfaces m1 of the leg shields LS on the downstream sides of the projections 71 and can be caused to reach the circumferential edge portions e1. For this reason, an effect of delaying separation of head winds can be enhanced by the circumferential edge portions e1 of the leg shields LS.

In the foregoing flow-straightening structure for a saddle riding-type vehicle, the lengths of the projections 71 in the projection longitudinal direction are longer than distances from the circumferential edge portions e1 to the projections 71.

According to this constitution, since the projections 71 are disposed away from the circumferential edge portions e1 of the leg shields LS by distances shorter than their lengths, while an effect of generating winds having a high flow rate on the front surfaces m1 of the leg shields LS on the downstream sides of the projections 71 is achieved, elimination of winds having a high flow rate due to the projections 71 which are excessively far from the circumferential edge portions e1 can be curbed.

In the foregoing flow-straightening structure for a saddle riding-type vehicle, the projections 71 are disposed such that the projection longitudinal direction intersects the circumferential edge portions e1.

According to this constitution, since the projection longitudinal direction is directed in the vehicle forward-rearward direction, air resistance of the projections 71 at the time of receiving head winds from a side in front of the vehicle can be curbed. In addition, pressure change in head winds can be made gentle utilizing the lengths of the projections 71, and thus generation of wind noise due to the projections 71 can be curbed. In addition, due to the disposition in which the projection longitudinal direction intersects the circumferential edge portions e1 of the leg shields LS, compared to a case of disposition in which the projection longitudinal direction lies along the circumferential edge portions e1 of the leg shields LS, the air flows utilizing the lengths of the projections 71 can be favorably controlled.

In the foregoing flow-straightening structure for a saddle riding-type vehicle, the plurality of projections 71 are disposed along the circumferential edge portions e1.

According to this constitution, since a plurality of projections 71 generating turbulent flows in head winds are arranged along the circumferential edge portions e1 of the leg shields LS, entrainment of head winds can be curbed by generating turbulent flows across extensive ranges of the circumferential edge portions e1, and thus comfort of an occupant can be improved.

**In** the foregoing flow-straightening structure for a saddle riding-type vehicle, each of the projections 71 is symmetrically formed with respect to the axis C1 in the projection longitudinal direction.

According to this constitution, since each of the projections 71 is symmetrically formed with respect to the axis C1 in the projection longitudinal direction, a flow of a head wind can be straightened to be straight in the projection longitudinal direction, and thus an effect of straightening a flow can be enhanced.

**In** the foregoing flow-straightening structure for a saddle riding-type vehicle, each of the projections 71 has a mountain shape having the protrusion apex portion Zt in a side view orthogonal to the projection longitudinal direction. The front side inclined portion ascending from the projection front end portion 71a toward the protrusion apex portion Zt is provided on the front side of the projection 71 in the vehicle forward-rearward direction, and the rear side inclined portion descending from the protrusion apex portion Zt toward the projection rear end portion 71b is provided on the rear side of the projection 71 in the vehicle forward-rearward direction.

According to this constitution, since each of the projections 71 is formed to have a mountain shape in a side view, and since the front side inclined portion which gradually ascends is provided at the front portion of the projection 71 and the rear side inclined portion which gradually descends is provided at the rear portion of the projection 71, air resistance of the projection 71 can be further reduced, and pressure change in a head wind can be made gentle.

In the foregoing flow-straightening structure for a saddle riding-type vehicle, since the front side inclined portion has a gentler slope than the rear side inclined portion when the front side inclined portion is longer than the rear side inclined portion in the projection longitudinal direction, air resistance at the front portion of the projection 71 can be further reduced, and an effect of generating a turbulent flow can be enhanced by making the inclination of the rear side inclined portion steep.

In the foregoing flow-straightening structure for a saddle riding-type vehicle, since the rear side inclined portion has a gentler slope than the front side inclined portion when the rear side inclined portion is longer than the front side inclined portion in the projection longitudinal direction, air resistance at the rear portion of the projection 71 can be further reduced, and a disturbance effect of a head wind can be further improved by increasing the flow rate of a head wind at the rear portion of the projection 71.

### <Second embodiment>

Next, a second embodiment of the present invention will be described with reference to the diagrams.

This embodiment particularly differs from the first embodiment in being applied to a scooter-type vehicle having step floors and a swing unit, instead of a business-type motorcycle in which an engine is supported by a vehicle body. For the rest, the same reference signs are applied to constitutions which are the same as those of the foregoing embodiment, and detailed description thereof will be omitted.

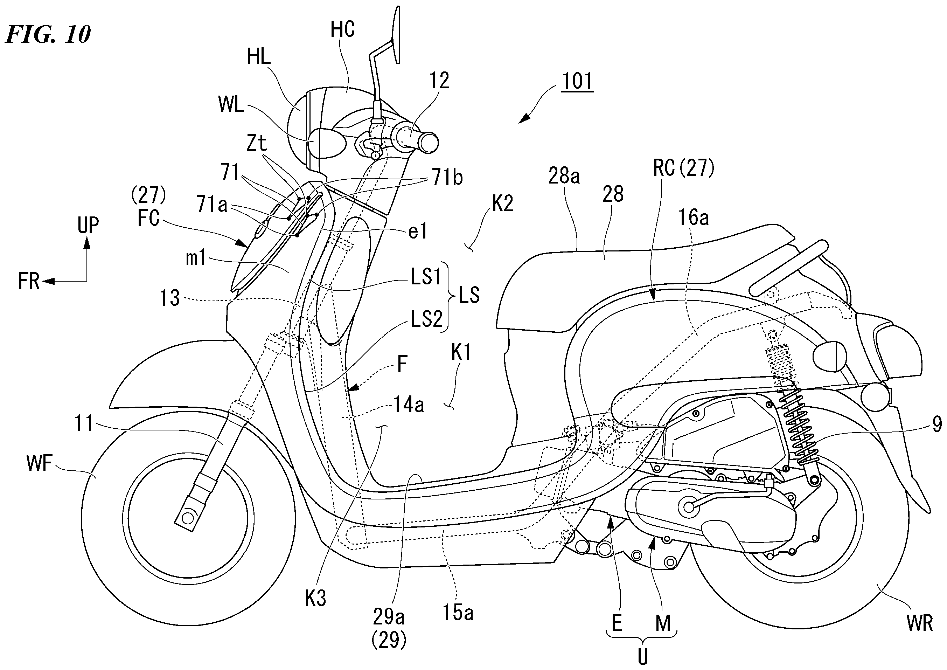

As illustrated in Fig. 10, a motorcycle (saddle riding-type vehicle) 101 of the present embodiment includes the head pipe 13 in the front end portion of the vehicle body frame F. The front forks 11 pivotally supporting the front wheel WF and the steering handlebars 12 are supported by the head pipe 13 in a steerable manner. The lower side of the front portion of a swing-type power unit (which will hereinafter be referred to as a power unit U) is supported by a lower portion of the vehicle body frame F in a vertically swingable manner. The motorcycle 101 is a unit swing-type saddle riding-type vehicle. The motorcycle 101 includes the power unit (swing unit) U in which the engine (internal-combustion engine: motor) E and the rear wheel WR (driving wheel) integrally swing with respect to the vehicle body frame F (main body of the vehicle body).

The power unit U integrally includes the engine E at the front portion, and a transmission case accommodating a transmission M on the left side of the rear portion.

The power unit U is an integrated unit in which the engine E serving as a motor of the motorcycle 101 is disposed at the front portion, and the transmission M performing gear shifting with respect to an output of the engine E is disposed on the left side of the rear portion, respectively. An axle of the rear wheel WR (driving wheel) is supported by the rear portion of the transmission M. For example, the lower side of the front portion of the power unit U is supported by a support portion of the lower portion of the vehicle body frame F in a vertically swingable manner via a suspension link and the like. The rear end portion of the power unit U is supported by a rear end portion of the vehicle body frame F via the rear cushions 9 (cushioning device).

The vehicle body frame F includes a down frame 14a extending downward to the rear from the head pipe 13, a lower frame 15a extending rearward from a lower end portion of the down frame 14a, and a rear frame 16a extending upward to the rear from a rear end portion of the lower frame 15a.

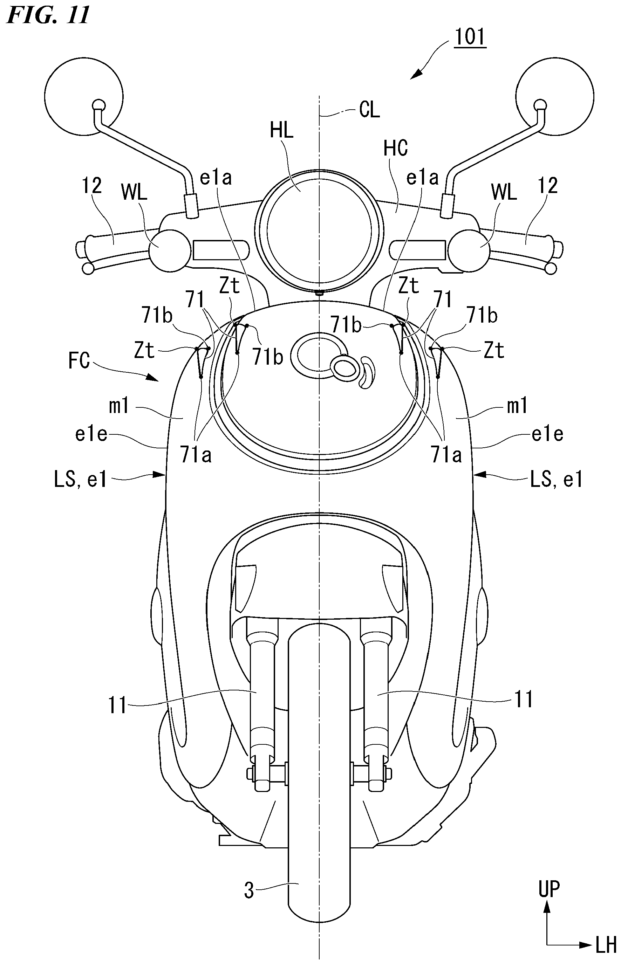

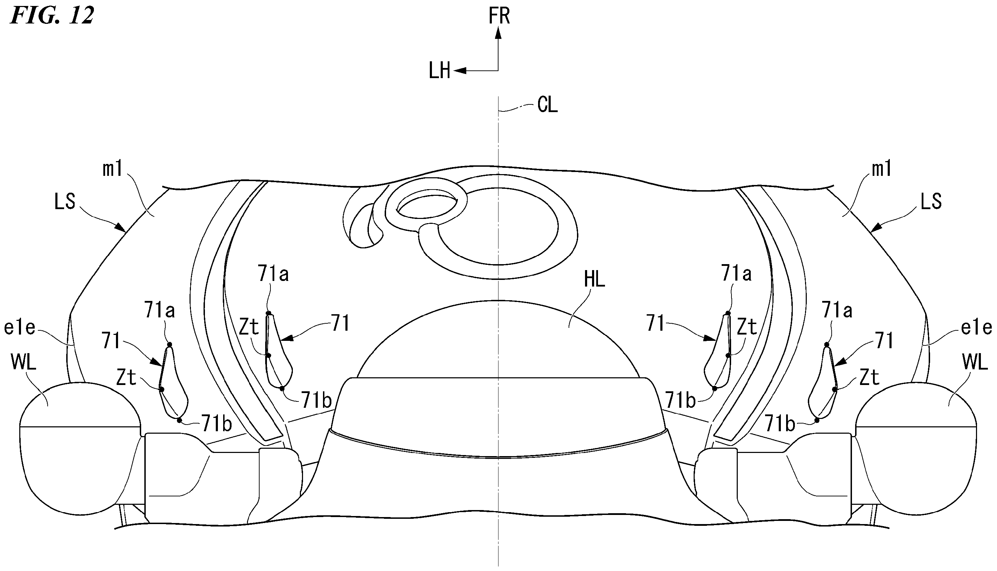

Also with reference to Figs. 11 and 12, a part around the vehicle body frame F is covered with the vehicle body cover 27. The seat 28 having front and rear seat surfaces for occupants sitting thereon is supported above a rear portion of the vehicle body cover 27. The vehicle body cover 27 includes step floors 29 on which a rider sitting on the seat 28 puts his/her feet, a front body cover (front cowl) FC which leads to a side in front of the step floors 29, and a rear body cover (rear cowl) RC which leads to a side behind the step floors 29. The leg shields LS covering a side in front of the leg disposition spaces K3 are formed on both left and right sides of the front body cover FC in a combined structure of front and rear covers forming front and rear surfaces of the front body cover FC. The leg shields LS may have a single-ply plate structure.

The seat 28 for an occupant sitting thereon is supported above the rear body cover RC. A space above the step floors 29 and between the seat 28 and the steering handlebars 12 serves as the straddling space K1 allowing an occupant to easily straddle the vehicle body. The steering handlebars 12 are respectively covered with the handlebar covers HC except for the left and right grip portions. The headlamp HL is disposed on the front side at the center in the lateral direction between the handlebar covers HC, and the pair of left and right winker lamps WL are disposed on the front sides of the left and right side portions of the handlebar covers HC.

For example, the step floors 29 have a flat shape across a lateral width of a low floor portion of the vehicle body and form substantially horizontal upper surfaces (floor surfaces, that is, footrest surfaces 29a) of the low floor portion. A constitution in which a center tunnel extending in the forward-rearward direction is provided at the center of the step floors 29 in the lateral direction may be adopted.

The motorcycle 101 is a scooter-type vehicle having the step floors 29 on which a rider puts his/her feet. The upper surfaces (footrest surfaces) 29a of the step floors 29 are slightly inclined upward to the rear in a side view.

### <Cowl projection structure>

As illustrated in Figs. 10 to 12, the motorcycle 101 includes the projections 71 for generating turbulent flows in head winds in the vicinity of the upper end portions on the front surfaces m1 of the leg shields LS.

The projections 71 are disposed within ranges having prescribed widths along the front surfaces m1 from the circumferential edge portions e1 (outer circumferential edge portions) to the inner circumferential side on the front surfaces m1 of the leg shields LS. When viewed in a direction perpendicular to the projection installation positions (points) on the front surfaces m1 (surface-perpendicular direction), the projections 71 are disposed such that extended lines thereof in the longitudinal direction (projection longitudinal direction) intersect the circumferential edge portions e1. When viewed in the surface-perpendicular direction, straight lines (axes C1, refer to Fig. 4 and the like) in the projection longitudinal direction are disposed at angles closer to the vertical axis (for example, within a range of 45° to 90°) instead of angles closer to the horizontal axis (for example, within a range of 0° to 45°) with respect to tangential lines of the circumferential edge portions e1 at intersections between the tangential lines and the circumferential edge portions e1.

The projections 71 are disposed at prescribed distances along the front surfaces m1 from the circumferential edge portions e1 of the leg shields LS to the inner circumferential side. The prescribed distances are set to lengths shorter than the overall lengths of the projections 71 in the projection longitudinal direction.

A plurality of projections 71 are disposed side by side along the circumferential edge portions e1. Specifically, a plurality of (two) projections 71 are disposed side by side along the upper edge portions e1a at the upper end portions of the leg shields LS. The plurality of projections 71 provided at the upper end portions of the leg shields LS are disposed along the upper edge portions e1a with gaps therebetween. In a front view of the vehicle, the plurality of projections 71 provided at the upper end portions of the leg shields LS are disposed such that the steering handlebars 12 are positioned on extensions in the projection longitudinal direction.

Each of the projections 71 has an inclination angle along the front surface m1 and is disposed such that the projection longitudinal direction is directed in the vehicle forward-rearward direction.

Each of the projection 71 has the largest height portion Zm in the projection height direction behind the central position Yc in the projection longitudinal direction. The projection 71 has the first inclined portion 81 which is inclined to a side in front of the protrusion apex portion Zt so as to be positioned downward toward the front side. The projection 71 has the second inclined portion 84 which is inclined to a side behind the protrusion apex portion Zt so as to be positioned downward toward the rear side. The projection 71 has the first inclined portion 81 which serves as a forward descending front side inclined portion in front of the protrusion apex portion Zt and has the second inclined portion 84 which serves as a rearward descending rear side inclined portion behind the protrusion apex portion Zt. In the projection 71, the first inclined portion 81 serving as a front side inclined portion is formed to be longer than the second inclined portion 84 serving as a rear side inclined portion in the projection longitudinal direction.

The front body cover FC includes attachment devices (not illustrated) for detachably attaching the projections 71 to the leg shields LS.

### <Operation>

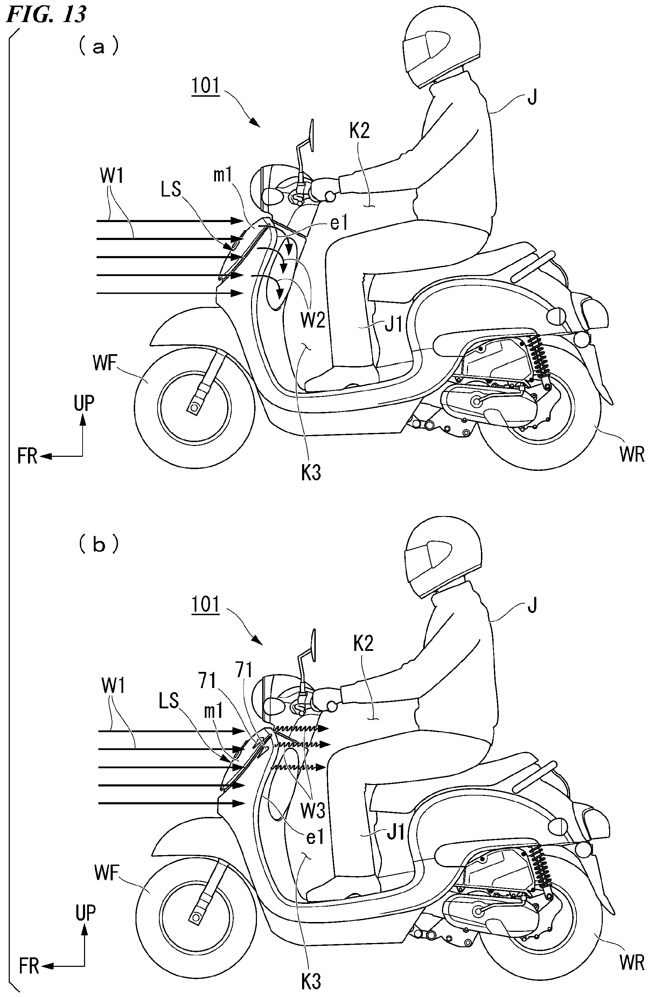

Next, operation of the projections 71 of the present embodiment will be described with reference to Fig. 13.

With reference to the comparative example in Fig. 13(a), if the head winds W1 flow around the leg shields LS when the motorcycle 101 travels, negative pressures are generated behind the circumferential edge portions e1 (particularly, the upper edge portions e1a) of the leg shields LS. The head winds W1 which have flowed on the front surfaces m1 of the leg shields LS along their curves are sucked due to the negative pressures behind the leg shields LS and flow such that they are entrained into the riding space K2 (into the leg disposition spaces K3) behind the leg shields LS. These head winds W1 cause air resistance around the leg shields LS by being separated from the circumferential edge portions e1 of the leg shields LS. In addition, some head winds W1 become air flows (entrainment winds W2) entrained into the riding space K2 (into the leg disposition spaces K3) behind the leg shields LS, and these entrainment winds W2 blow into the leg disposition spaces K3 from above and outer sides, thereby affecting comfort around the leg parts J1 of the occupant J.

Regarding the foregoing comparative example, as illustrated in Fig. 13(b), the following effects are exhibited by providing the projections 71 in the vicinity of the upper edge portions e1a on the front surfaces m1 in the leg shields LS. That is, when the projections 71 are provided in flows of the head winds W1 along the front surfaces m1 of the leg shields LS, the small turbulent flows (vortices) W3 are generated in these head winds W1. Since these turbulent flows W3 are caused to flow in the vicinity of the upper edge portions ela of the leg shields LS, boundary layers of the head winds W1 are made turbulent in the vicinity of the upper edge portions e1a of the leg shields LS, and separation of air flows from the upper edge portions e1a of the leg shields LS is delayed. Accordingly, generation of large vortices immediately after the head winds W1 have passed through the upper edge portions e1a of the leg shields LS is curbed, and generation of air flows (entrainment winds) which may be entrained into the riding space K2 is curbed. Therefore, air resistance of the leg shields LS is reduced, and an influence on the riding space K2 can be inhibited. The foregoing effects can be enhanced by providing the projections 71 in the vicinity of the side edge portions e1e of leg shields LS.

As described above, also in the saddle riding scooter-type vehicle, with a flow-straightening structure according to the second embodiment, since the outer surfaces of the front body cover FC (the front surfaces m1 of the leg shields LS) are provided with the projections 71 generating turbulent flows in head winds flowing along these outer surfaces (front surfaces m1), an effect of delaying separation of head winds from the outer surfaces of the front body cover FC (the front surfaces m1 of the leg shields LS) is achieved due to prescribed turbulent flows generated behind the projections 71. For this reason, occurrence of air resistance due to separation of head winds immediately behind the front body cover FC (immediately behind the leg shields LS) can be curbed. In addition, entrainment of head winds toward the riding space K2 behind the front body cover FC (the leg disposition spaces K3 behind the leg shields LS) can be curbed, and thus comfort of an occupant can be improved.

### <Third embodiment>

Next, a third not claimed embodiment of the present invention will be described with reference to the diagrams.

This not claimed embodiment particularly differs from the second embodiment in being applied to a scooter-type vehicle having a center tunnel extending in the vehicle forward-rearward direction between left and right step floors and having a wind screen standing upward beyond steering handlebars. For the rest, the same reference signs are applied to constitutions which are the same as those of the foregoing embodiments, and detailed description thereof will be omitted.

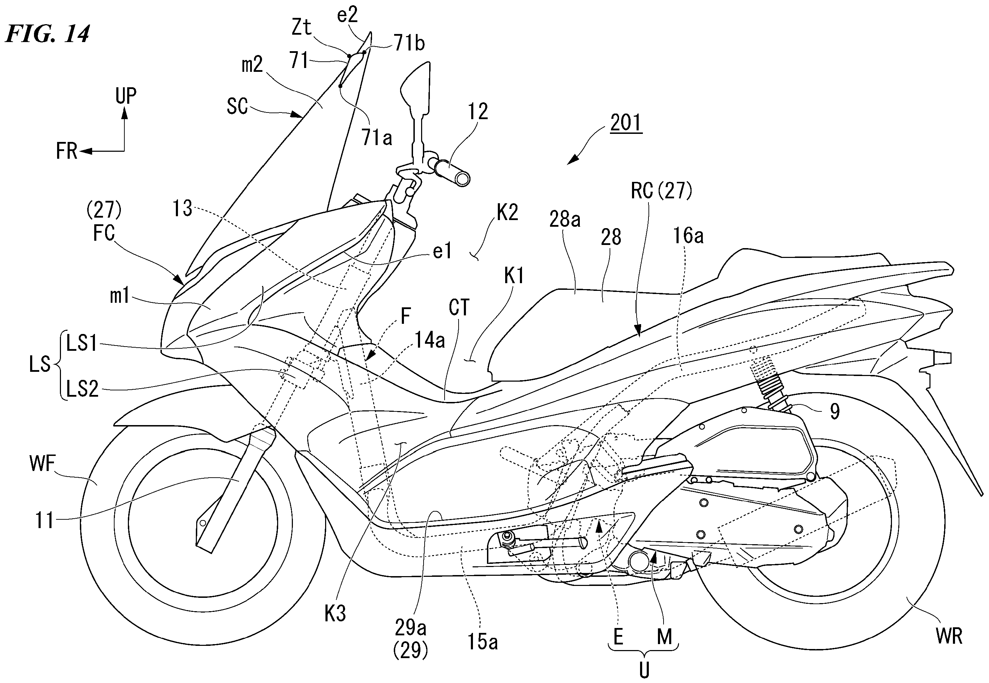

As illustrated in Fig. 14, a motorcycle (saddle riding-type vehicle) 201 of the present not claimed embodiment includes the head pipe 13 in the front end portion of the vehicle body frame F. The front forks 11 pivotally supporting the front wheel WF and the steering handlebars 12 are supported by the head pipe 13 in a steerable manner. The lower side of the front portion of a swing-type power unit (which will hereinafter be referred to as a power unit U) is supported by the lower portion of the vehicle body frame F in a vertically swingable manner. The motorcycle 101 is a unit swing-type saddle riding-type vehicle. The motorcycle 101 includes the power unit (swing unit) U in which the engine (internal-combustion engine: motor) E and the rear wheel WR (driving wheel) integrally swing with respect to the vehicle body frame F (main body of the vehicle body).

The power unit U integrally includes the engine E at the front portion, and a transmission case 35 accommodating the transmission M on the left side of the rear portion.

The power unit U is an integrated unit in which the engine E serving as a motor of the motorcycle 201 is disposed at the front portion, and the transmission M performing gear shifting with respect to an output of the engine E is disposed on the left side of the rear portion, respectively. The axle of the rear wheel WR (driving wheel) is supported by the rear portion of the transmission M. For example, the lower side of the front portion of the power unit U is supported by the support portion of the lower portion of the vehicle body frame F in a vertically swingable manner via a suspension link and the like. The rear end portion of the power unit U is supported by the rear end portion of the vehicle body frame F via the rear cushions 9 (cushioning device).

The vehicle body frame F includes the down frame 14a extending downward to the rear from the head pipe 13, the lower frame 15a extending rearward from the lower end portion of the down frame 14a, and the rear frame 16a extending upward to the rear from the rear end portion of the lower frame 15a.

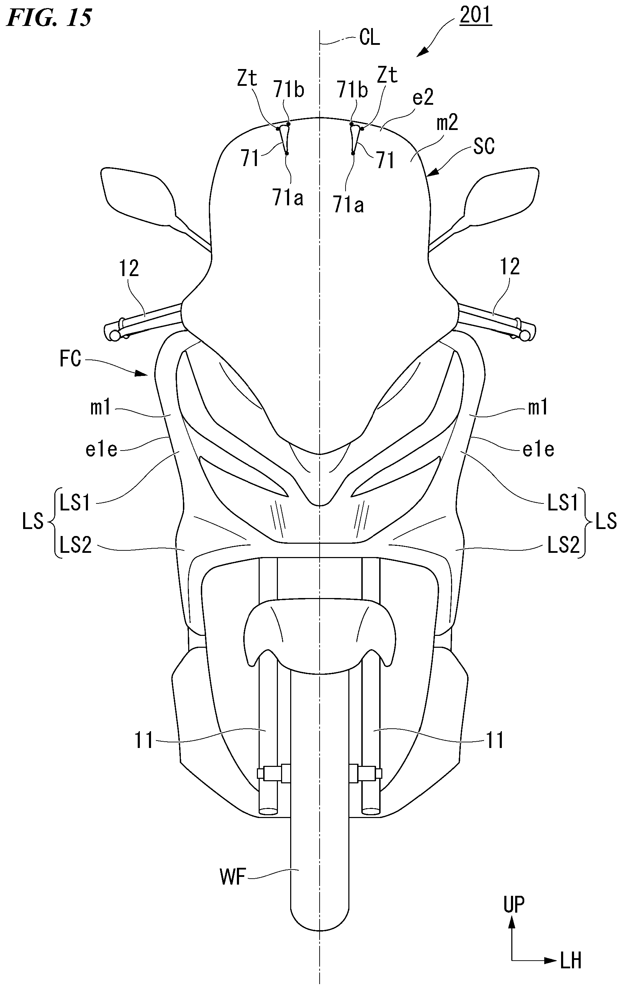

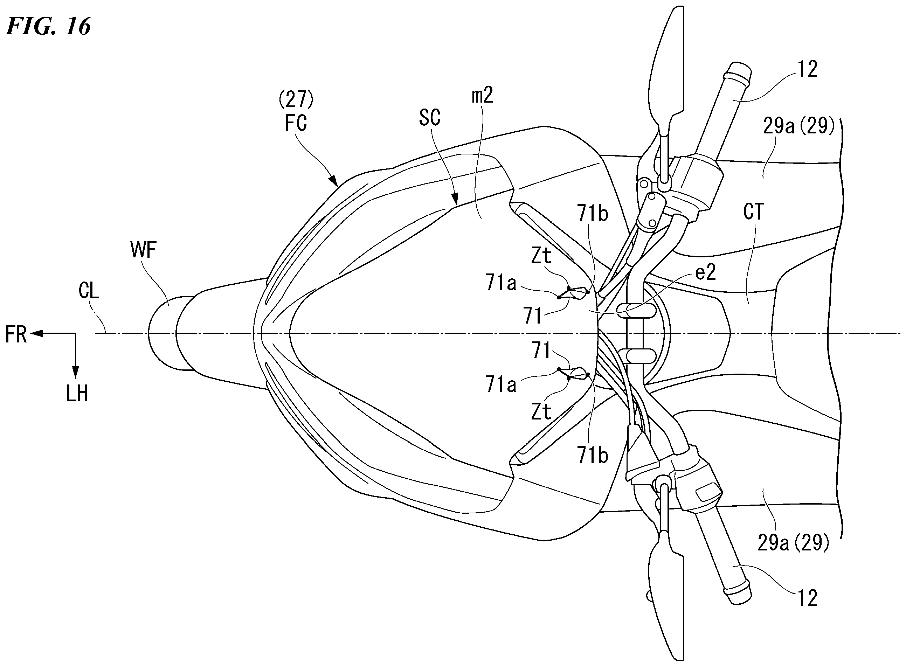

Also with reference to Figs. 15 and 16, a part around the vehicle body frame F is covered with the vehicle body cover 27. The seat 28 having front and rear seat surfaces for occupants sitting thereon is supported above the rear portion of the vehicle body cover 27. The vehicle body cover 27 includes a pair of left and right step floors 29 on which a rider sitting on the seat 28 puts his/her feet, a center tunnel CT which is formed between the left and right step floors 29 and extends in the forward-rearward direction, the front body cover (front cowl) FC which leads to a side in front of the left and right step floors 29 and the center tunnel CT, and the rear body cover (rear cowl) RC which leads to a side behind the left and right step floors 29 and the center tunnel CT. The leg shields LS covering a side in front of the leg disposition spaces K3 are formed on both left and right sides of the front body cover FC in a combined structure of front and rear covers forming front and rear surfaces of the front body cover FC. The leg shields LS may have a single-ply plate structure.

The seat 28 for an occupant sitting thereon is supported above the rear body cover RC. A space above the step floors 29 and between the seat 28 and the steering handlebars 12 serves as the straddling space K1 allowing an occupant to easily straddle the vehicle body. A screen SC standing in front of the upper portion of the riding space K2 is provided on the upper side of the front portion of the front body cover FC. The screen SC extends to a side above the steering handlebars 12.

The left and right step floors 29 form substantially horizontal upper surfaces (floor surfaces, that is, the footrest surface 29a) of the low floor portion.

The motorcycle 101 is a scooter-type vehicle having the step floors 29 on which a rider puts his/her feet. The upper surfaces (footrest surfaces) 29a of the step floors 29 are slightly inclined upward to the rear in a side view.

### <Cowl projection structure>

As illustrated in Figs. 14 to 16, the motorcycle 201 includes the projections 71 for generating turbulent flows in head winds in the vicinity of the upper end portion on a front surface m2 of the screen SC. In the screen SC, the front surface m2 facing a side in front of the vehicle has an arc shape (curved shape) inclined upward to the rear in a side view and projecting forward in a plan view.

The projections 71 are disposed downward within ranges having prescribed widths along the front surface m2 from an upper edge portion e2 on the front surface m2 of the screen SC. When viewed in a direction perpendicular to the projection installation positions (points) on the front surface m2 (surface-perpendicular direction), the projections 71 are disposed such that extended lines thereof in the longitudinal direction (projection longitudinal direction) intersect the upper edge portion e2. When viewed in the surface-perpendicular direction, a straight line (axis C1) in the projection longitudinal direction is disposed at an angle closer to the vertical axis (for example, within a range of 45° to 90°) instead of an angle closer to the horizontal axis (for example, within a range of 0° to 45°) with respect to a tangential line of the upper edge portion e2 at an intersection between the tangential line and the upper edge portion e2.

The projections 71 are disposed at prescribed distances along the front surface m2 from the upper edge portion e2 of the screen SC to the lower side. The prescribed distances are set to lengths shorter than the overall lengths of the projections 71 in the projection longitudinal direction.

A plurality of projections 71 are disposed side by side along the upper edge portion e2. Specifically, a plurality of (two) projections 71 are disposed side by side along the upper edge portions e1a at the upper end portion of the screen SC. The plurality of projections 71 provided at the upper end portion of the screen SC are disposed along the upper edge portions e1a with a gap therebetween. The plurality of projections 71 are disposed in a bilaterally symmetrical manner.

Each of the projections 71 has an inclination angle along the front surface m2 and is disposed such that the projection longitudinal direction is directed in the vehicle forward-rearward direction.

The projection 71 has the largest height portion Zm in the projection height direction behind the central position Yc in the projection longitudinal direction. The projection 71 has the first inclined portion 81 which is inclined to a side in front of the protrusion apex portion Zt so as to be positioned downward toward the front side. The projection 71 has the second inclined portion 84 which is inclined to a side behind the protrusion apex portion Zt so as to be positioned downward toward the rear side. The projection 71 has the first inclined portion 81 which serves as a forward descending front side inclined portion in front of the protrusion apex portion Zt and has the second inclined portion 84 which serves as a rearward descending rear side inclined portion behind the protrusion apex portion Zt. In the projection 71, the first inclined portion 81 serving as a front side inclined portion is formed to be longer than the second inclined portion 84 serving as a rear side inclined portion in the projection longitudinal direction.

The front body cover FC includes attachment devices (not illustrated) for detachably attaching the projections 71 to the screen SC.

### <Operation>

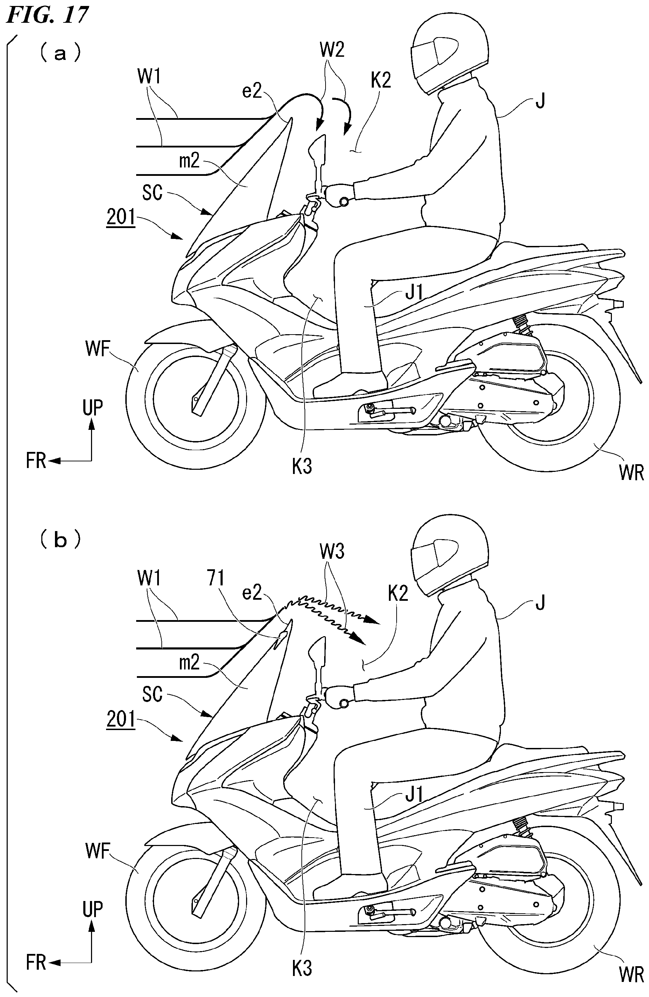

Next, operation of the projections 71 of the present not claimed embodiment will be described with reference to Fig. 17.

With reference to the comparative example in Fig. 17(a), if head winds W1 flow around the screen SC when the motorcycle 201 travels, a negative pressure is generated behind the circumferential edge portion (particularly, the upper edge portion e2) of the screen SC. The head winds W1 which have flowed on the front surface m1 of the screen SC along its curve are sucked due to the negative pressure behind the screen SC and flow such that they are entrained into the riding space K2 behind the screen SC. These head winds W1 cause air resistance around the screen SC by being separated from the circumferential edge portion of the screen SC. In addition, some head winds W1 become air flows (entrainment winds W2) entrained into the riding space K2 behind the screen SC, and these entrainment winds W2 blow into the riding space K2 from above and outer sides, thereby affecting comfort of the occupant J.

Regarding the foregoing comparative example, as illustrated in Fig. 17(b), the following effects are exhibited by providing the projections 71 in the vicinity of the upper edge portion e2 on the front surface m1 in the screen SC. That is, when the projections 71 are provided in flows of the head winds W1 along the front surface m1 of the screen SC, the small turbulent flows (vortices) W3 are generated in these head winds W1. Since these turbulent flows W3 are caused to flow in the vicinity of the upper edge portion e2 of the screen SC, boundary layers of the head winds W1 are made turbulent in the vicinity of the upper edge portion e2 of the screen SC, and separation of air flows from the upper edge portion e2 of the screen SC is delayed. Accordingly, generation of large vortices immediately after the head winds W1 have passed through the upper edge portion e2 of the screen SC is curbed, and generation of air flows (entrainment winds) which may be entrained into the riding space K2 is curbed. Therefore, air resistance of the screen SC is reduced, and an influence on the riding space K2 can be inhibited. The foregoing effects can be enhanced by providing the projections 71 in the vicinity of the side edge portion of the screen SC.

As described above, also in the flow-straightening structure for a saddle riding-type vehicle according to the third not claimed embodiment, since the front body cover FC includes the screen SC extending upward beyond the steering handlebars 12, the projections 71 are disposed on the front surface m2 in the screen SC facing a side in front of the vehicle.

Also in the third not claimed embodiment, since the outer surface of the front body cover FC (the front surface m2 of the screen SC) is provided with the projections 71 generating turbulent flows in head winds flowing along this outer surface (front surface m2), an effect of delaying separation of head winds from the outer surface of the front body cover FC (the front surface m2 of the screen SC) is achieved due to prescribed turbulent flows generated behind the projections 71. For this reason, occurrence of air resistance due to separation of head winds immediately behind the front body cover FC (immediately behind the screen SC) can be curbed. In addition, entrainment of head winds toward the riding space K2 behind the front body cover FC (the leg disposition spaces K3 behind the screen SC) can be curbed, and thus comfort of an occupant can be improved.

The present invention is not limited to the foregoing embodiments. For example, the number of projections is not limited to the foregoing embodiments and can be varied. The projections are not limited to attachable/detachable constitutions and may be fixed by bonding or may be integrally formed with parts where they are disposed.

The saddle-scooter-type vehicle includes all types of scooter-type vehicles and also scooter-type vehicles having three wheels (including vehicles having two front wheels and one rear wheel in addition to vehicles having one front wheel and two rear wheels) or four wheels.

### [Reference Signs List]

1 Motorcycle (saddle riding-type vehicle)
12 Steering handlebar
28 Seat
28a Seat surface
FC Front body cover (front cowl)
LS Leg shield
m1 Front surface (outer surface)
e1 Circumferential edge portion
SC Screen
m2 Front surface (outer surface)
e2 Upper edge portion
71 Projection
71a Front end portion
71b Rear end portion
ms Attachment structure
C1 Axis
Zt Protrusion apex portion
K2 Riding space
K3 Leg disposition space

## Claims

1. A saddle riding scooter-type vehicle, with a flow-straightening structure comprising:
a front cowl (FC) that is disposed in front of a riding space (K2),
wherein outer surfaces (m1) of the front cowl (FC) are provided with projections (71) for generating prescribed turbulent flows in head winds flowing along the outer surfaces (m1),
wherein each of the projections (71) has a mountain shape having a protrusion apex portion (Zt) when viewed from a side orthogonal to a projection longitudinal direction across a pair of end portions (71a, 71b),
wherein a front side inclined portion ascending from a projection front end portion (71a) toward the protrusion apex portion (Zt) is provided on a front side of the projection (71) in a vehicle forward-rearward direction, and a rear side inclined portion descending from the protrusion apex portion (Zt) toward a projection rear end portion (71b) is provided on a rear side of the projection (71) in the vehicle forward-rearward direction,
wherein either one of the front side inclined portion and the rear side inclined portion is shorter than the other in the projection longitudinal direction,
wherein the front cowl (FC) includes leg shields (LS) which are disposed in front of leg disposition spaces (K3) on both sides of a lower portion in the riding space (K2),
wherein the projections (71) are disposed on the front surfaces (m1) in the leg shields (LS) facing a side in front of the vehicle, and
wherein upper ends of the leg shields (LS) extend to a side above a seat surface (28a) of a seat (28).

2. The saddle riding scooter-type vehicle, with a flow-straightening structure according to claim 1,
wherein the projections (71) are disposed on front surfaces (m1) in the front cowl (FC) facing a side in front of the vehicle and are disposed within ranges having widths set in advance from circumferential edge portions (e1) to an inner circumferential side on the front surfaces (m1).

3. The saddle riding scooter-type vehicle, with a flow-straightening structure according to claim 2,
wherein the projections (71) are disposed at distances set in advance from the circumferential edge portions (e1).

4. The saddle riding scooter-type vehicle, with a flow-straightening structure according to claim 2 or 3,
wherein the projections (71) are disposed such that the projection longitudinal direction across the pair of end portions (71a, 71b) intersects the circumferential edge portions (e1).

5. The saddle riding scooter-type vehicle, with a flow-straightening structure according to any one of claims 2 to 4,
wherein lengths of the projections (71) in the vehicle forward-rearward direction that is the projection longitudinal direction across the pair of end portions (71a, 71b) are longer than distances from the circumferential edge portions (e1) to the projections (71).

6. The saddle riding scooter-type vehicle, with a flow-straightening structure according to any one of claims 2 to 5,
wherein the plurality of projections (71) are disposed along the circumferential edge portions (e1).

7. The saddle riding scooter-type vehicle, with a flow-straightening structure according to any one of claims 1 to 6,
wherein each of the projections (71) is symmetrically formed with respect to an axis (C1) in the projection longitudinal direction across the pair of end portions (71a, 71b).

8. The saddle riding scooter-type vehicle, with a flow-straightening structure according to claim 1,
wherein the projections (71) are disposed such that the projection longitudinal direction across the pair of end portions (71a, 71b) is directed in the vehicle forward-rearward direction and steering handlebars (12) are disposed on extensions in the projection longitudinal direction in a front view of the vehicle.

9. The saddle riding scooter-type vehicle, with a flow-straightening structure according to any one of claims 1 to 8,
wherein the front cowl (FC) includes a screen (SC) extending upward beyond the steering handlebars (12), and
wherein the projections (71) are additionally disposed on the front surfaces (m1) in the screen (SC)
facing a side in front of the vehicle.

10. The saddle riding scooter-type vehicle, with a flow-straightening structure according to any one of claims 1 to 9 further comprising:
attachment structures (ms) for detachably attaching the projections (71) to the front cowl (FC).

## Patentansprüche

1. Rollerartiges Sattelaufsitzfahrzeug mit einer Strömungsausricht-Struktur, umfassend:
eine Frontverkleidung (FC), die vor einem Aufsitzraum (K2) angeordnet ist, wobei Außenflächen (m1) der Frontverkleidung (FC) mit Vorsprüngen (71) versehen sind, um in entlang den Außenflächen (m1) fließenden Gegenwinden vorgeschriebene turbulente Strömungen zu erzeugen, wobei, bei Betrachtung von einer Vorderseite orthogonal zu einer Vorsprungslängsrichtung quer zu einem Paar von Endabschnitten (71a, 71b), jeder der Vorsprünge (71) eine Hügelform mit einem Vorsprungs-Scheitelabschnitt (Zt) hat,
wobei ein vorderseitiger schräger Abschnitt, der von einem Vorsprungs-Vorderendabschnitt (71a) zu dem Vorsprungs-Scheitelabschnitt (Zt) ansteigt, in Fahrzeug-Vorne-Hinten-Richtung, an einer Vorderseite des Vorsprungs (71) vorgesehen ist, und ein rückseitiger schräger Abschnitt,
der von dem Vorsprungs-Scheitelabschnitt (Zt) zu einem Vorsprungs-Hinterendabschnitt (71b) absteigt, in der Fahrzeug-Vorne-Hinten-Richtung an einer Rückseite des Vorsprungs (71) vorgesehen ist,
wobei einer des vorderseitigen schrägen Abschnitts und des rückseitigen schrägen Abschnitts in der Vorsprungs-Längsrichtung kürzer als der andere ist,
wobei die Frontverkleidung (FC) Beinschilde (LS) enthält, die beiden Seiten eines unteren Abschnitts des Aufsitzraums (K2) vor Bein-Abstellräumen (K3) angeordnet sind,
wobei die Vorsprünge (71) an den Vorderflächen (m1) in den Beinschildern (LS) angeordnet sind, die zu einer Seite vor dem Fahrzeug weisen, und
wobei sich obere Enden der Beinschilder (LS) zu einer Seite oberhalb einer Sitzfläche (28a) eines Sitzes (28) erstrecken.

2. Das rollerartige Sattelaufsitzfahrzeug mit einer Strömungsausricht-Struktur nach Anspruch 1,
wobei die Vorsprünge (71) an zu einer Seite vor das Fahrzeug weisenden Vorderflächen (m1) in der Frontverkleidung (FC) angeordnet sind, und innerhalb von Bereichen angeordnet sind, deren Breiten vorab von Umfangsrandabschnitten (e1) zu einer Innenumfangsseite an den Vorderflächen (m1) gelegt sind.

3. Das rollerartige Sattelaufsitzfahrzeug mit einer Strömungsausricht-Struktur nach Anspruch 2,
wobei die Vorsprünge (71) mit Abständen angeordnet sind, die vorab von den Umfangsrandabschnitten (e1) gelegt sind.

4. Das rollerartige Sattelaufsitzfahrzeug mit einer Strömungsausricht-Struktur nach Anspruch 2 oder 3,
wobei die Vorsprünge (71) derart angeordnet sind, dass die Vorsprungs-Längsrichtung quer zum Paar von Endabschnitten (71a, 71b) die Umfangsrandabschnitte (e1) schneidet.

5. Das rollerartige Sattelaufsitzfahrzeug mit einer Strömungsausricht-Struktur nach einem der Ansprüche 2 bis 4,
wobei die Längen der Vorsprünge (71) in der Fahrzeug-Vorne-Hinten-Richtung, welche die Vorsprungs-Längsrichtung quer zum Paar von Endabschnitten (71a, 71b) ist, länger sind als Abstände von den Umfangsrandabschnitten (e1) zu den Vorsprüngen (71).

6. Das rollerartige Sattelaufsitzfahrzeug mit einer Strömungsausricht-Struktur nach einem der Ansprüche 2 bis 5,
wobei die Mehrzahl von Vorsprüngen (71) entlang den Umfangsrandabschnitten (e1) angeordnet ist.

7. Das rollerartige Sattelaufsitzfahrzeug mit einer Strömungsausricht-Struktur nach einem der Ansprüche 1 bis 6,
wobei jeder der Vorsprünge (71) in Bezug auf eine Achse (C1) in der Vorsprung-Längsrichtung quer zum Paar von Endabschnitten (71a, 71b) symmetrisch ausgebildet ist.

8. Das rollerartige Sattelaufsitzfahrzeug mit einer Strömungsausricht-Struktur nach Anspruch 1,
wobei die Vorsprünge (71) derart angeordnet sind, dass die Vorsprungs-Längsrichtung quer zum Paar von Endabschnitten (71a, 71b) in der Fahrzeug-Vorne-Hinten-Richtung ausgerichtet ist, und Lenkstangen (12), in Vorderansicht des Fahrzeugs, an Verlängerungen in Vorsprung-Längsrichtung angeordnet sind.

9. Das rollerartige Sattelaufsitzfahrzeug mit einer Strömungsausricht-Struktur nach einem der Ansprüche 1 bis 8,
wobei die Frontverkleidung (FC) eine Windschutzscheibe (SC) enthält, die sich über die Lenkstange (12) hinaus aufwärts erstreckt, und
wobei die Vorsprünge (71) zusätzlich auf den Vorderflächen (m1) in der Windschutzscheibe (SC) angeordnet sind, die zu einer Seite vor dem Fahrzeug weisen.

10. Das rollerartige Sattelaufsitzfahrzeug mit einer Strömungsausricht-Struktur nach einem der Ansprüche 1 bis 9, das ferner Befestigungsstrukturen (ms) aufweist, um die Vorsprünge (71) an der Frontverkleidung (FC) lösbar anzubringen.

## Revendications

1. Véhicule de type scooter à pilotage sur selle, ayant une structure de redressement de flux comprenant :
un capot avant (FC) qui est disposé devant un espace de pilotage (K2),
dans lequel des surfaces extérieures (m1) du capot avant (FC) sont dotées de projections (71) pour générer des flux turbulents prescrits dans des vents de face s'écoulant le long des surfaces extérieures (m1),
dans lequel chacune des projections (71) a une forme de montagne ayant une partie de sommet en saillie (Zt) lorsqu'elle est observée d'un côté orthogonal à une direction longitudinale de projection à travers une paire de parties d'extrémité (71a, 71b)
dans lequel une partie inclinée côté avant s'élevant depuis une partie d'extrémité avant de projection (71a) vers la partie de sommet en saillie (Zt) est prévue sur un côté avant de la projection (71) dans une direction avant-arrière du véhicule, et une partie inclinée côté arrière descendant depuis la partie de sommet en saillie (Zt) vers une partie d'extrémité arrière de projection (71b) est prévue sur un côté arrière de la projection (71) dans la direction avant-arrière du véhicule,
dans lequel l'une des parties inclinées côté avant et côté arrière est plus courte que l'autre dans la direction longitudinale de projection,
dans lequel le capot avant (FC) comporte des protège-jambes (LS) qui sont disposés devant des espaces de disposition de jambes (K3) sur les deux côtés d'une partie inférieure dans l'espace de pilotage (K2),
dans lequel les projections (71) sont disposées sur les surfaces avant (m1) dans les protège-jambes (LS) faisant face à un côté devant le véhicule, et
dans lequel des extrémités supérieures des protège-jambes (LS) s'étendent jusqu'à un côté au-dessus d'une surface de siège (28a) d'un siège (28).

2. Véhicule de type scooter à pilotage sur selle, ayant une structure de redressement de flux selon la revendication 1,
dans lequel les projections (71) sont disposées sur des surfaces avant (m1) dans le capot avant (FC) faisant face à un côté devant le véhicule et sont disposées dans des plages ayant des largeurs définies à l'avance allant de parties de bord circonférentielles (e1) jusqu'à un côté circonférentiel intérieur sur les surfaces avant (m1).

3. Véhicule de type scooter à pilotage sur selle, ayant une structure de redressement de flux selon la revendication 2,
dans lequel les projections (71) sont disposées à des distances définies à l'avance à partir des parties de bord circonférentielles (e1).

4. Véhicule de type scooter à pilotage sur selle, ayant une structure de redressement de flux selon la revendication 2 ou 3,
dans lequel les projections (71) sont disposées de telle sorte que la direction longitudinale de projection à travers la paire de parties d'extrémité (71a, 71b) entrecoupe les parties de bord circonférentielles (e1).

5. Véhicule de type scooter à pilotage sur selle, ayant une structure de redressement de flux selon l'une quelconque des revendications 2 à 4,
dans lequel des longueurs des projections (71) dans la direction avant-arrière du véhicule qui est la direction longitudinale de projection à travers la paire de parties d'extrémité (71a, 71b) sont plus longues que des distances allant des parties de bord circonférentielles (e1) jusqu'aux projections (71).

6. Véhicule de type scooter à pilotage sur selle, ayant une structure de redressement de flux selon l'une quelconque des revendications 2 à 5,
dans lequel la pluralité de projections (71) sont disposées le long des parties de bord circonférentielles (e1).

7. Véhicule de type scooter à pilotage sur selle, ayant une structure de redressement de flux selon l'une quelconque des revendications 1 à 6,
dans lequel chacune des projections (71) est formée symétriquement par rapport à un axe (C1) dans la direction longitudinale de projection à travers la paire de parties d'extrémité (71a, 71b).

8. Véhicule de type scooter à pilotage sur selle, ayant une structure de redressement de flux selon la revendication 1,
dans lequel les projections (71) sont disposées de telle sorte que la direction longitudinale de projection à travers la paire de parties d'extrémité (71a, 71b) est dirigée dans la direction avant-arrière du véhicule et un guidon de direction (12) est disposé sur des extensions dans la direction longitudinale de projection sur une vue de face du véhicule.

9. Véhicule de type scooter à pilotage sur selle, ayant une structure de redressement de flux selon l'une quelconque des revendications 1 à 8,
dans lequel le capot avant (FC) comporte un écran (SC) s'étendant vers le haut au-delà du guidon de direction (12), et
dans lequel les projections (71) sont de plus disposées sur les surfaces avant (m1) dans l'écran (SC) faisant face à un côté devant le véhicule.

10. Véhicule de type scooter à pilotage sur selle, ayant une structure de redressement de flux selon l'une quelconque des revendications 1 à 9 comprenant en outre :
des structures de fixation (ms) pour fixer de manière amovible les projections (71) au capot avant (FC).
